# EUROPÄISCHE PATENTSCHRIFT

(11) **EP 1 706 654 B1**
(45) Veröffentlichungstag und Bekanntmachung des Hinweises auf die Patenterteilung: **29.10.2008**
(21) Anmeldenummer: 04764889.4
(22) Anmeldetag: 07.09.2004
(51) Int. Cl.: F16B 39/02, F16B 39/38, F16B 39/286

(54) **GEWINDERING**
THREADED RING
BAGUE FILETEE

(30) Priorität: 22.01.2004 DE 102004003183
(43) Veröffentlichungstag der Anmeldung: 04.10.2006
(73) Patentinhaber: Spieth-Maschinenelemente Gmbh & Co Kg, 73730 Esslingen (DE)
(72) Erfinder: METZGER, Heinz, 73230 Kirchheim (DE)
(74) Vertreter: Bartels, Martin Erich Arthur
(86) Internationale Anmeldenummer: PCT/EP2004/009943
(87) Internationale Veröffentlichungsnummer: WO 2005/073570

(56) Entgegenhaltungen:
- EP-A- 0 794 338
- EP-A- 0 965 768
- DE-A- 10 252 780
- GB-A- 280 273

## Beschreibung

Die Erfindung betrifft einen Gewindering, dessen mit einem Innengewinde versehener, einstückiger Körper mindestens zwei Körperteile aufweist, deren erster einen Stellring mit einer endseitigen, in einer Radialebene liegenden Planfläche bildet und deren zweiter Körperteil einen Sicherungsring bildet, der mit dem ersten Körperteil unter Bildung eines zwischen beiden Körperteilen befindlichen Spaltes über einen elastisch nachgiebigen Wandteil des Körpers verbunden ist und eine Betätigungseinrichtung aufweist, mittels deren die Geometrie des Spaltes aufgrund der elastischen Nachgiebigkeit des Wandteiles entlang der Längsachse des Körpers einstellbar ist.

Gewinderinge dieser Art, wie sie beispielsweise in der DE-Auslegeschrift 1 675 685 offenbart sind, sind handelsüblich und finden auf verschiedenen Gebieten des Maschinenbaus Anwendung. Der die Planfläche bildende Körperteil dient als auf einem Außengewinde einer Welle oder Spindel sitzende Genauigkeitsmutter, deren axiale Position entlang der Längsachse des Gewinderinges mittels des als Sicherungsring dienenden zweiten Körperteiles exakt festlegbar ist, indem das zwischen Außengewinde und Innengewinde vorhandene Gewindeflankenspiel dadurch beseitigt wird, dass mittels der Betätigungseinrichtung die Weite des Spaltes zwischen beiden Körperteilen entsprechend verändert wird, was aufgrund der elastischen Nachgiebigkeit des die Körperteile verbindenden Wandteiles möglich ist.

Als Betätigungseinrichtung können Spannschrauben vorgesehen sein, die ein gegenseitiges Verspannen von Stellring und Sicherungsring ermöglichen. Der Stellring kann als Stellmutter dienen, deren Planfläche eine Anlagefläche zur Positionierung von Wälzlagern auf Wellen bildet oder als genau positionierter Wellenbund dienen kann oder dergleichen.

Bei dem bekannten Gewindering der eingangs genannten Art ist der Spalt zwischen den Körperteilen durch zwei in axialer Richtung zueinander versetzte Spaltabschnitte gebildet, von denen einer sich von der Gewindebohrung ausgehend bis in die Nähe des Umfanges des Gewinderinges erstreckt und der andere, von der Umfangsfläche ausgehend, radial nach innen bis in die Nähe der Gewindebohrung verläuft. Zwischen beiden Spaltabschnitten befindet sich der elastisch nachgiebige Wandteil, welcher die beiden Körperteile verbindet und dessen Wandstärke so gewählt ist, dass dieser Wandteil in der Weise elastisch nachgiebig ist, dass die Geometrie des Spaltes durch die als Betätigungseinrichtung dienenden Spannschrauben so eingestellt werden kann, dass durch Verspannen beider Körperteile das Gewindeflankenspiel beseitigt und die gewünschte Sicherungswirkung erreicht ist. Nachteilig bei diesem bekannten Gewindering ist der verhältnismäßig hohe Herstellungsaufwand.

Durch die EP 0 965 768 A1 ist ein weiterer gattungsgemäßer Gewindering bekannt, der in der Art einer Präzisions-Spannmutter ausgebildet ist. Die bekannte Präszisions-Spannmutter weist einen massiven Mutternblock auf, der ein Innengewinde, eine planbearbeitete und im rechten Winkel zur Achse des Gewindes ausgerichtete Stirnfläche sowie eine Umfangsfläche besitzt. Einzelne Klemmelemente bilden jeweils einen sich radial erstreckenden und segmentförmigen Ausschnitt aus einem Teil des Mutternblockes. Die Klemmelemente sind bei der bekannten Lösung zur axialen Sicherung mittels einer achsparallel bedienbaren Klemmschraube federnd kippbar. Die Klemmelemente bilden zudem höchsten 50% des genannten Teils derart, dass beim axialen Sichern auf der Spannseite höchstens 50% des Gewindeumfanges in der ursprünglich gefertigten Form verändert werden. Ein Verzug der Planfläche und das Lösen durch nicht ausreichende Sicherung ist dergestalt vermieden. Zwar weist diese bekannte Lösung gegenüber der eingangs erwähnten Lösung im Stand der Technik nur noch einen offenen Spaltabschnitt auf und nicht zwei, der darüber hinaus auch nach außen hin geschlossen ist, so dass insoweit keine Fremdstoffe in den Spaltbereich von außen her eindringen können und insoweit sind auch der Herstellaufwand und mithin die Kosten entsprechend reduziert; allein die Herstellung der segmentförmigen Klemmelemente ist wiederum mit einem erhöhten Herstellaufwand verbunden und das Erreichen einer gleichförmigen Klemmkrafteinleitung ist aufgrund der segmentförmigen Ausgestaltung der Klemmelemente gleichfalls erschwert.

Durch die DE-A-102 52 780 A1 ist ein weiterer gattungsgemäßer Gewindering bekannt, wobei der als Sicherungsring dienende zweite Körperteil zur Bildung des elastisch nachgiebigen Wandteiles einen Umfangsbereich aufweist, der gegenüber dem ersten Körperteil auf einen Außendurchmesser verringert ist, der deutlich auf einem kleineren Radius liegt als das radial außenliegende Ende des Spaltes und wobei der im Durchmesser verringerte Umfangsbereich des zweiten Körperteils vom Spalt in einem axialen Abstand endet, der die Erstreckung des nachgiebigen Wandteils in Axialrichtung definiert.

Anstelle der aufwendigen Herstellung zweier Spaltabschnitte ist bei dieser bekannten Lösung zur Bildung des nachgiebigen Wandteiles lediglich die Ausbildung eines einteiligen Spaltes als Inneneinstich und die Außenbearbeitung des zweiten Körperteils erforderlich, um dessen Außendurchmesser bereichsweise zu verringern, was durch einfache spanende Bearbeitung erfolgen kann.

Des weiteren kann es bei den bekannten Lösungen dazu kommen, dass nach Festlegen des Stellringes auf dem zuordenbaren Gewindestück und anschließendem Anziehen des Sicherungsringes es ungewollt zu plastischen Verformungen entlang der in Rede stehenden Gewindegänge kommen kann, was zum Unbrauchbarwerden des Gewinderinges führt, der sich dann gegebenenfalls nicht mehr von dem Festlegegewinde entfernen läßt. Zwar besteht dem Grunde nach die Möglichkeit, über Drehmomentschlüssel mit vorgebbarem Sicherheitsdrehmoment die dahingehende Problematik zu vermeiden; im praktischen Anwendungsfall für die Gewinderinge wird aber häufig auch in Ermangelung eines geeigneten Drehmomentschlüsselwerkzeuges die dahingehende Maßnahme außer acht gelassen und der Gewindering mit konventionellen Werkzeugen festgelegt.

Ausgehend von diesem letztgenannten Stand der Technik liegt der Erfindung die Aufgabe zugrunde, die bekannte Gewindering-Lösung unter Beibehalten ihrer Vorteile, nämlich einfach und kostengünstig herstellbar zu sein dahingehend weiter zu verbessern, dass bei einer verkleinerten Baugröße dennoch ein hoher Wirkungsgrad erreichbar ist, d.h. dass durch Verspannen beider Körperteile das Gewindeflankenspiel zum Erreichen der gewünschten Sicherungswirkung wirksam beseitigt ist. Eine dahingehende Aufgabe löst ein Gewindering mit der Merkmalsausgestaltung des Patentanspruches 1.

Dadurch, dass gemäß dem kennzeichnenden Teil des Patentanspruches 1 im Vormontagezustand zwischen Teilen der Betätigungseinrichtung und Teilen des Körpers eine mit einer vorgebbaren Neigung versehene Anlagefläche vorhanden ist und dass der Neigungswinkel gegenüber der Längsachse des Körpers derart gewählt ist, dass im Montagezustand ein Auftreten des Gewindeflankenspiel beseitigt ist, wird im Montagezustand die Spannkraft der Betätigungseinrichtung innenumfangseitig nah an den zu klemmenden Gewindeflanken wirksam, so dass aufgrund der günstigen Abstände zwischen dem äußeren radialen Ende des Spaltes, dem Krafteintritt der Betätigungseinrichtung über die geneigte Anlagefläche und den zu klemmenden Gewindeflanken ein hoher Wirkungsgrad erzielt ist, d.h. das Gewindeflankenspiel ist wirksam für den Erhalt einer ausreichenden Sicherung beseitigt. Der erfindungsgemäße Gewindering ist einfach und kostengünstig herstellbar und benötigt nur wenig Bauraum, da zum einen keine zwei Spaltabschnitte vorzusehen sind, sondern nur einer und des weiteren kann auch darauf verzichtet werden, die beiden Körperteile bezogen auf ihren Umfangsbereich unterschiedlich auszugestalten.

Als zusätzlicher Vorteil kommt hinzu, dass am Gewindering kein nach außen offener Spaltabschnitt vorhanden ist; der erfindungsgemäße Gewindering also eine geschlossene Umfangskontur besitzt, so dass unter anderem dadurch die Gefahr vermieden wird, dass sich im Betrieb Fremdstoffe in dem am Umfang ansonsten offenen Spaltbereich ablagern könnten, etwa in Schmierstoffen enthaltene Verunreinigungen, Abriebpartikel, Späne oder dergleichen, die am Umfang des Gewinderinges zur Bildung einer Unwuchtmasse führen könnten. Aufgrund der hülsenförmigen Ausgestaltung ist darüber hinaus eine gleichförmige Krafteinleitung mit dem Gewindering erreicht, und somit eine hohe Sicherung des Gewinderinges am Ort seines Einbaus.

Durch die beanspruchte Schrägstellung des Sicherungsringes vor der definierten Festlegeposition des Gewinderinges auf dem zuordenbaren Gewinde ist darüber hinaus sichergestellt, dass der Stellring sich definiert festlegen läßt und beim anschließenden Anziehen des Sicherungsringes wird erst das zuordenbare Gewindeflankenspiel überwunden, bevor die Sicherungskrafteinleitung über den Sicherungsring auf den Stellring erfolgt. Aufgrund dieser Maßnahme hat es sich gezeigt, dass sich dergestalt plastische Verformungen beim Festlegevorgang zwischen den Gewindegängen weitestgehend viermeiden lassen, so dass auch bei einem unsachgerechten Festlegevorgang der Gewindering von seiner Funktion her erhalten bleibt und ohne weiteres vom zugeordneten Gewinde auch wieder entfernbar ist.

Bei einer bevorzugten Ausführungsform des erfindungsgemäßen Gewinderinges ist vorgesehen, dass die Betätigungseinrichtung Spannmittel aufweist, die soweit sie im Montagezustand in zuordenbaren Aufnahmen des Sicherungsringes versenkt sind, mit ihren Spannanlageflächen zu der Stirnseite des Sicherungsringes einen Festlegewinkel bilden, der dem Neigungswinkel im Vormontagezustand entspricht. Hierdurch ergibt sich eine optische Überprüfungsmöglichkeit für einen erfolgreich durchgeführten Festlegevorgang anhand des genannten Festlegewinkels.

Weitere vorteilhafte Ausführungsformen sind Gegenstand der sonstigen Unteransprüche.

Im Folgenden wird der erfindungsgemäße Gewindering anhand zweier Ausführungsbeispiele nach der Zeichnung näher erläutert. Dabei zeigen in prinzipieller und nicht maßstäblicher Darstellung die
- Fig. 1 einen nur halbseitig dargestellten Längsschnitt des ersten Ausführungsbeispieles des erfindungsgemäßen Gewinderinges auf einer Gewindespindel, wobei im Interesse der leichten Erkennbarkeit des Funktionsprinzips die Darstellung schematisch vereinfacht und insbesondere das Gewindeflankenspiel vergrößert gezeichnet ist und sich der Gewindering im ungesicherten Zustand befindet, wie er dem Vormontagezustand entspricht;
- Fig. 2 eine der Fig. 1 entsprechende Darstellung, wobei jedoch der aufgeschraubte Gewindering im gesicherten Zustand, also im Montagezustand gezeigt ist; und
- Fig. 3 und 4 ein zweites Ausführungsbeispiel analog den Darstellungen nach den Fig. 1 und 2.

Der in den Figuren dargestellte Gewindering weist zwei Hauptteile auf, nämlich einen ersten Körperteil 10, der als Stellring oder Stellmutter dient und einen zweiten Körperteil 12, der einen Sicherungsring bildet. Beide Körperteile 10 und 12 sind mit jeweils einem durchgehenden Innengewinde 14, 16 versehen, wobei bei dem gezeigten Ausführungsbeispiel das Innengewinde 14 des ersten Körperteiles 10 mehr Gewindegänge aufweist als das Innengewinde 16 des zweiten Körperteiles 12. Mit den dahingehenden Innengewinden 14, 16 läßt sich der Gewindering auf einen mit einem Außengewinde 18 versehenen Abschnitt einer Spindel 20 aufschrauben. Des weiteren weist der Körperteil 10 eine endseitige Planfläche 22 auf, die zur Lagefixierung eines Ringkörpers 24 dient, der als Wellenbund auf der Spindel 20 sitzt.

Zwischen den beiden Körperteilen 10 und 12 befindet sich ein Spalt 26, der sich im Montagezustand des Gewinderinges vom Außengewinde 18 ausgehend in radialer Richtung erstreckt, und dessen radial äußeres Ende 28 sich in einem radialen Abstand vom gemeinsamen Umfang der beiden Körperteile 10, 12 befindet. Das radial äußere Ende 28 des Spaltes 26 begrenzt mit dem gemeinsamen Umfang 30 ein Wandteil 32, über den der erste Körperteil 10 und der zweite Körperteil 12 einstückig miteinander zusammenhängen. Die Wandstärke dieses Wandteiles 32 ist derart gewählt, dass das Wandteil 32 eine Art Schwachstelle ausbildet, also einen nachgiebigen Wandteil darstellt, der bei aus Stahlwerkstoff hergestelltem Gewindering eine elastische Lageeinstellung des zweiten Körperteiles 12 relativ zum ersten Körperteil 10 ermöglicht, wobei eine entsprechende Einstellung der Geometrie des Spaltes 26 vorgenommen wird, beispielsweise die Spaltweite örtlich verändert wird.

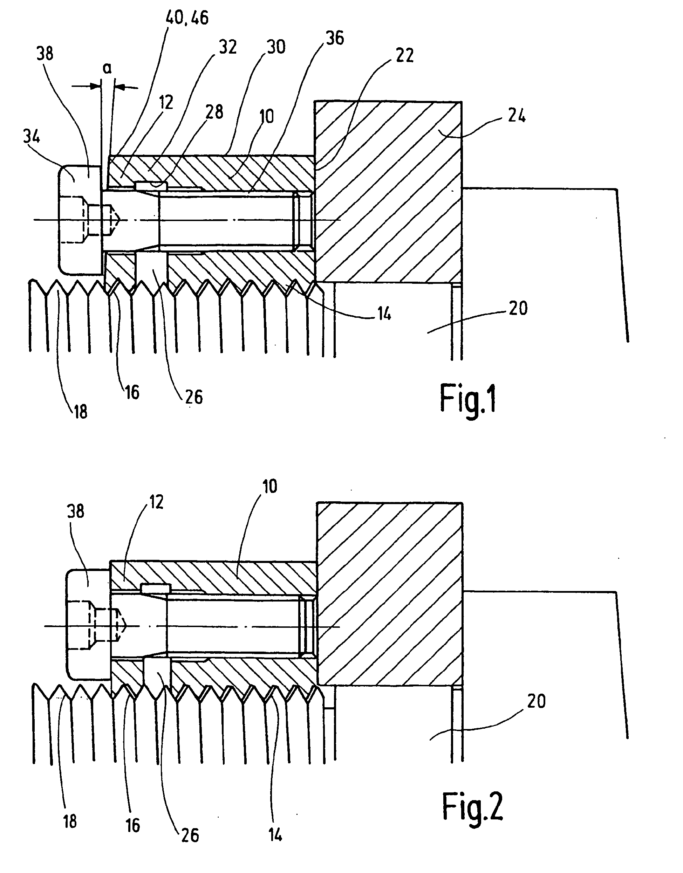

Als Betätigungseinrichtung zur Einstellung der Geometrie des Spaltes 26 sind als Spannmittel einzelne Spannschrauben 34 vorgesehen, die den Spalt 26 achsparallel durchgreifen, in Gewindebohrungen 36 des ersten Körperteiles 10 eingreifen und mit ihren Schraubenköpfen 38 sich stirnseitig am zweiten Körperteil 12 im Montagezustand (vgl. Fig. 2) abstützen. Die Spannschrauben 34 sind auf einen zu der Längsachse des Gewinderinges konzentrischen Teilkreis gleichmäßig verteilt angeordnet, wobei beispielsweise sechs Spannschrauben vorgesehen sein können (nicht dargestellt). Beim vorliegenden Ausführungsbeispiel sind die Spannschrauben 34 als Innensechskantschrauben ausgebildet, deren Schraubenköpfe 38 auf die freie Stirnseite 40 des Gewinderinges einwirken. Anstelle der gezeigten Innensechskantschrauben können in kostengünstiger Weise auch übliche Sechskantschrauben eingesetzt werden, da bei der gezeigten Ausführungsform nach den Fig. 1 und 2 die Möglichkeit besteht radial von außen her und nicht von der Stirnseite kommend die Spannschrauben 34 anzuziehen.

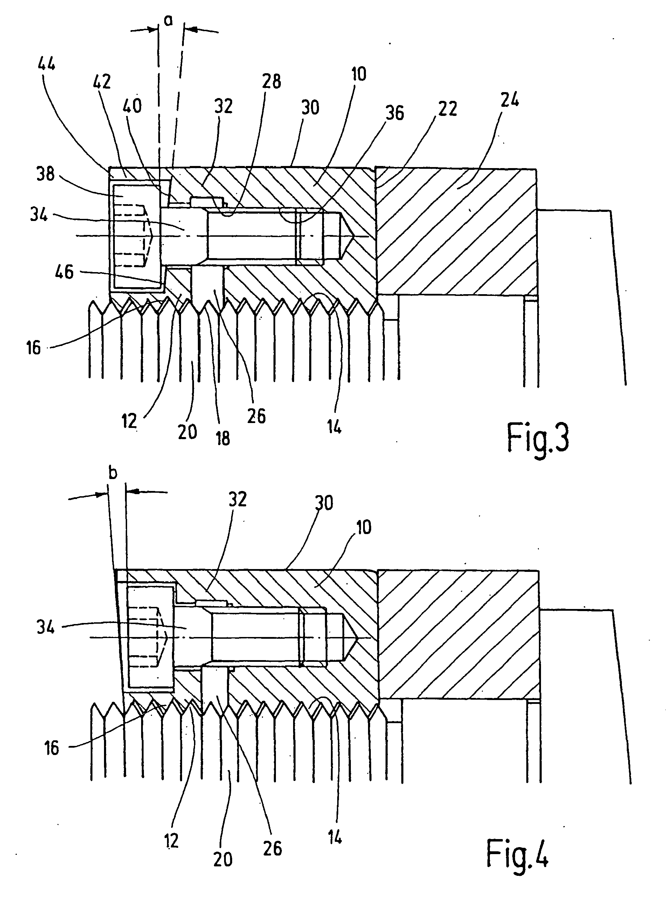

Bei dem zweiten Ausführungsbeispiel nach den Fig. 3 und 4 hingegen sind die Schraubenköpfe 38 in einem axial sich erweiternden Endabschnitt einer zugehörigen Durchgangsbohrung 42 jeweils so versenkt aufgenommen, dass im Vormontagezustand die Schraubenköpfe 38 im wesentlichen mit der äußeren Stirnfläche 44 des zweiten Körperteiles 12 bündig sind. Mit dem beschriebenen erweiterten Endabschnitt geht bei der Ausführungsform nach den Fig. 3 und 4 auch ein verlängerter Innengewindeabschnitt bezogen auf das Innengewinde 16 des zweiten Körperteiles 12 einher. Ansonsten entsprechen sich die beiden Ausführungsbeispiele von ihrer Funktion und Wirkung her, so dass die bisher getroffenen Ausführungen zu dem ersten Ausführungsbeispiel auch entsprechend für den Gegenstand des zweiten Ausführungsbeispieles gelten und insoweit werden für das zweite Ausführungsbeispiel die selben Bezugszeichen verwendet für einzelne Bauteile wie bei dem ersten Ausführungsbeispiel nach den Fig. 1 und 2.

Die Fig. 1 zeigt den ungesicherten Zustand, also den Vormontagezustand des Gewinderinges, wobei ein vorhandenes Gewindeflankenspiel des Gewindeeingriffes zwischen Innengewinden 14 und 16, sowie Außengewinde 18 zur Verdeutlichung vergrößert eingezeichnet ist. Wie zu ersehen ist, befinden sich hierbei die in der Zeichnung rechtsseitig gelegenen Flankenflächen der Innengewinde 14, 16 in einem Abstand von den in der Zeichnung linksseitig gelegenen Flankenflächen des Außengewindes 18.

Fig. 2 zeigt den gesicherten Zustand, also den Montagezustand, bei dem durch Betätigen der Betätigungseinrichtung mit den einzelnen Spannschrauben 34 der zweite Körperteil 12 gegen den ersten Körperteil 10 so verspannt ist, dass beim zweiten Körperteil 12 die rechtsseitig gelegenen Flankenflächen des Innengewindes 16 sich an den Flankenflächen des Außengewindes 18 abstützen, wohingegen sich beim ersten Körperteil 10 die linksseitig gelegenen Flankenflächen des Innengewindes 14 am Außengewinde 18 abstützen, so dass die aus miteinander verspannten Körperteilen 10 und 12 gebildete Einheit des Gewinderinges insgesamt gesichert ist.

Der erfindungsgemäße Gewindering ist rotationssymetrisch aufgebaut und weist keine Unwucht erzeugende Nuten, Schlitze usw. auf. Die auf einem konzentrischen Teilkreis gleichmäßig verteilten Spannschrauben 34 ergeben in Zusammenwirkung mit der nachgiebigen Auslegung des Wandteiles 32 gleichmäßige Klemmkräfte am Gewinde. Diese Klemmkräfte sorgen für einen intensiven Kontakt an den Gewindeflanken von Innen- und Außengewinden 14, 16 bzw. 18 und demzufolge für eine hohe axiale Steifigkeit des Gewinderinges am gesamten Umfang. Gegebenenfalls vorhandene geringe Formfehleranpassungen und Oberflächenverdichtungen können bei der Montage durch ein verstärktes Verspannen der Körperteile 10 und 12 ausgeglichen werden. Die Planfläche 22 des als Stellring oder Stellmutter dienenden ersten Körperteiles 10 kann durch gezielt vorgenommenes und gleichmäßiges Anziehen der Spannschrauben 34 bis zur vollständigen sog. Schlagfreiheit ausgerichtet werden. Wenn erforderlich, ist es durch individuelles Nachziehen der Spannschrauben 34 möglich, einseitige Spannungen, verursacht durch kleinste Planlauffehler der anliegenden Teile, auszugleichen.

Neben der gegenseitigen Lagebeziehung zwischen Spalt 26 und den beiden Körperteilen 10, 12 kommt der Wandstärke des elastisch nachgiebigen Wandteiles 32 Bedeutung zu neben der weiteren bedeutsamen Ausgestaltung des erfindungsgemäßen Gewinderinges, nämlich im Vormontagezustand zwischen Teilen der Betätigungseinrichtung in Form der Spannschrauben 34 und Teilen des Körpers des Gewinderinges eine mit einer vorgebbaren Neigung a versehene Anlagefläche 46 vorzusehen, wobei der Neigungswinkel a gegenüber der Längsachse des Körpers derart gewählt ist, dass im Montagezustand das auftretende Gewindeflankenspiel wie dargelegt vollständig beseitigt ist. Der angegebene Neigungswinkel a kann für eine funktionssichere Verwendung Werte zwischen einem halben bis fünf Grad einnehmen, vorzugsweise nimmt er jedoch Werte zwischen ein bis drei Grad ein, in Abhängigkeit des zu schaffenden Ausgleiches für das Gewindeflankenspiel und der damit einhergehenden Gewindesteigung.

Die im Vormontagezustand schräg verlaufende Anlagefläche 46, die die Kopfauflagefläche für die Schraubenköpfe 38 der Spannschrauben 34 bildet, ist in jedem Fall so zu bemessen, dass sich die Anlagefläche 46 für den jeweiligen Schraubenkopf 38 nach dem Sichern der Schraubverbindung, frühestens bei dem maximal möglichen Gewindeflankenspiel der Schraubverbindung rechtwinklig einstellt (vgl. Montagezustand nach der Fig. 2). Bei den gezeigten Ausführungsbeispielen wirkt der größte Teil der von den Spannschrauben 34 erzeugten Spannkraft nah an dem zu klemmenden Spindelaußengewinde 18, so dass sich demgemäß ein wesentlich verbesserter Wirkungsgrad als bei den bekannten Gewinderinglösungen ergibt. Aufgrund des verbesserten Wirkungsgrades beim Klemmen und Sichern des Gewinderinges auf der Spindel 20, ist der erfindungsgemäße Gewindering sowohl in axialer als auch in radialer Richtung mit sehr kleinen Bauabmessungen realisierbar. Ferner erlaubt der verbesserte Wirkungsgrad den neuen Gewindering auch mit weniger Spannschrauben 34 auszubilden.

Bei der zweiten Ausführungsform nach den Fig. 3 und 4 ergibt sich noch die Besonderheit, dass bei einer Integrierung der Schraubenköpfe 38 in den Durchgangsbohrungen 42 im Montagezustand diese gegenüber der äußeren Stirnfläche 44 des Sicherungsringes 12 einen Festlegewinkel b bilden, der dem Neigungswinkel a im Vormontagezustand entspricht und der dergestalt eine optische Kontrolle über die Art der Festlegung zuläßt. Sofern die jeweilige Sechskantschraube mit ihrem Schraubenkopf 38 axial in der zuordenbaren Aufnahme im Sicherungsring 12 integriert ist, bietet sich die Verwendung von Innensechskantschrauben an gemäß der Darstellung nach den Fig.3 und 4 mit der Möglichkeit, von der axialen Stirnlängsseite her eine Festlegung oder Lösung des Gewinderinges mittels geeigneter Werkzeuge vorzunehmen. Bei der Ausführungsform nach den Fig.1 und 2 hingegen wird vorzugsweise als Sechskantschraube eine solche eingesetzt, deren Schraubenkopf 38 außenumfangsseitig den Sechskant aufweist. Dergestalt besteht die Möglichkeit, von der Umfangsseite des Gewinderinges her, also radial, die beschriebenen Festlege- und Lösevorgänge vorzunehmen.

## Patentansprüche

1. Gewindering, dessen mit einem Innengewinde (14, 16) versehener, einstückiger Körper mindestens zwei Körperteile (10, 12) aufweist, deren erster (10) einen Stellring mit einer endseitigen, in einer Radialebene liegenden Planfläche (22) bildet und deren zweiter Körperteil (12) einen Sicherungsring bildet, der mit dem ersten Körperteil (10) unter Bildung eines zwischen beiden Körperteilen (10, 12) befindlichen Spaltes (26) über einen elastisch nachgiebigen Wandteil (32) des Körpers verbunden ist und eine Betätigungseinrichtung aufweist, mittels deren die Geometrie des Spaltes (26) aufgrund der elastischen Nachgiebigkeit des Wandteiles (32) entlang der Längsachse des Körpers einstellbar ist, **dadurch gekennzeichnet, dass** im Vormontagezustand zwischen Teilen (38) der Betätigungseinrichtung (34) und Teilen (40) des Körpers (12) eine mit einer vorgebbaren Neigung versehene Anlagefläche (46) vorhanden ist und dass der Neigungswinkel (a) gegenüber der Längsachse des Körpers derart gewählt ist, dass im Montagezustand ein auftretendes Gewindeflankenspiel beseitigt ist.

2. Gewindering nach Anspruch 1, **dadurch gekennzeichnet, dass** im Montagezustand unter Beseitigung des Gewindeflankenspieles die Anlagefläche (46) senkrecht zu der Längsachse des Körpers verläuft.

3. Gewindering nach Anspruch 1 oder 2, **dadurch gekennzeichnet, dass** die Betätigungseinrichtung mehrere eine Veränderung der Weite des Spaltes (26) an ausgewählten Stellen ermöglichende Spannmittel aufweist.

4. Gewindering nach Anspruch 3, **dadurch gekennzeichnet, dass** zwischen den einzelnen Spannmitteln und dem zweiten Körperteil (12) im Vormontagezustand die geneigte Anlagefläche (46) angeordnet ist.

5. Gewindering nach Anspruch 3 oder 4, **dadurch gekennzeichnet, dass** jedem Spannmittel ein Teil der Anlagefläche (46) zugeordnet ist.

6. Gewindering nach einem der Ansprüche 3 bis 5, **dadurch gekennzeichnet, dass** das jeweilige Spannmittel stirnseitig an dem zweiten Körperteil (12) angreift, vorzugsweise in diesem in mindestens einer Aufnahme (Durchgangsbohrung 42) integriert ist.

7. Gewindering nach einem der Ansprüche 3 bis 6, **dadurch gekennzeichnet, dass** als Spannmittel Spannschrauben (34) vorgesehen sind, die auf einem koaxialen Teilkreis gleichmäßig angeordnet sind, den Spalt (26) achsparallel durchgreifen und sich mit ihren Schraubenköpfen (38) im Montagezustand an der Anlagefläche (46) am zweiten Körperteil (12) abstützen.

8. Gewindering nach Anspruch 7, **dadurch gekennzeichnet, dass** als Spannschrauben (34) Sechskantschrauben vorgesehen sind, die soweit sie im Montagezustand in zuordenbaren Aufnahmen (Durchgangsbohrung 42) des zweiten Körperteiles (12) versenkt sind, mit ihren Schraubenköpfen (38) zu der äußeren Stirnfläche (44) des zweiten Körperteiles (12) einen Festlegewinkel (b) bilden, der dem Neigungswinkel (a) im Vormontagezustand entspricht.

9. Gewindering nach einem der Ansprüche 1 bis 8, **dadurch gekennzeichnet, dass** der als Sicherungsring dienende zweite Körperteil (12) unter Bildung des elastisch nachgiebigen Wandteiles (32) einen Außendurchmesser aufweist, der gleich dem Außendurchmesser des ersten Körperteiles (10) in Form des Stellringes ist.

10. Gewindering nach einem der Ansprüche 1 bis 9, **dadurch gekennzeichnet, dass** der Neigungswinkel (a) ein halbes bis fünf Grad, vorzugsweise ein bis drei Grad beträgt.

## Claims

1. Threaded ring, the internally threaded (14, 16) one-piece body of which has at least two body components (10, 12), the first (10) of which forms an adjusting ring with an end plane surface (22) positioned in the radial plane and the second body component (12) of which forms a retaining ring, which is connected to the first body component (10) to form a gap (26) positioned between the two body components (10, 12) by way of the elastically flexible wall component (32) of the body and has an actuating mechanism by means of which the geometry of the gap (26) can be adjusted on the basis of the elastic flexibility of the wall component (32) along the longitudinal axis of the body, **characterised in that** in the pre-installation state, between the components (38) of the actuating mechanism (34) and components (40) of the body (12), there is a contact surface (46) which is provided with a definable inclination and that the angle of inclination (a) is selected relative to the longitudinal axis of the body such that, in the installation state, any play occurring on the flanks of the screw thread is eliminated.

2. Threaded ring according to claim 1, **characterised in that** when the play occurring on the flanks of the screw thread is eliminated, the contact surface (46) runs perpendicular to the longitudinal axis of the body in the installed state.

3. Threaded ring according to claim 1 or 2, **characterised in that** the actuating mechanism has a plurality of tensioning means permitting modification of the width of the gap (26) at selected points.

4. Threaded ring according to claim 3, **characterised in that** in the pre-installation state the inclined contact surface (46) is situated between the individual tensioning means and the second body component (12).

5. Threaded ring according to claim 3 or 4, **characterised in that** part of the contact surface (46) is assigned to each tensioning means.

6. Threaded ring according to one of claims 3 to 5, **characterised in that** the respective tensioning means acts on the second body component (12) at the front and is preferably integrated in the latter in at least one recess (through-bore 42).

7. Threaded ring according to one of claims 3 to 6, **characterised in that**, as tensioning means, there are clamping screws (34) distributed uniformly over a coaxial graduated circle, which said screws penetrating the gap (26) parallel with the axis, and in the installed state are supported with their screw heads (38) on the contact surface (46) on the second body component (12).

8. Threaded ring according to claim 7, **characterised in that** hexagonal head screws are provided as clamping screws (34), which, insofar as they are countersunk in assignable recesses (through-bores 42) of the second body component (12) in the installed state, with their screw heads (38) form a clamping angle (b) to the external front face (44) of the second body component (12) which corresponds to the angle of inclination (a) in the pre-installation state.

9. Threaded ring according to one of claims 1 to 8, **characterised in that** the second body component (12) functioning as a retaining ring has, for the purpose of forming the elastically flexible wall component (32), an outside diameter equal to the outside diameter of the first body component (10) in the form of the adjusting ring.

10. Threaded ring according to one of claims 1 to 9, **characterised in that** the angle of inclination (a) is one half to five degrees, preferably one to three degrees.

## Revendications

1. Bague filetée, dont le corps d'un seul tenant, pourvu d'un taraudage ( 14, 16 ), comprend au moins deux parties ( 10, 12 ) de corps dont la première ( 10 ) forme une bague de réglage pourvue d'une face plane terminale ( 22 ) située dans un plan radial, et dont la seconde partie ( 12 ) de corps forme une bague de sécurité, qui est reliée à la première partie ( 10 ) via une partie de paroi ( 32 ) élastiquement flexible du corps, un interstice ( 26 ) étant ainsi formé entre les deux parties ( 10, 12 ) du corps, et qui possède un organe d'actionnement, à l'aide duquel la géométrie de l'interstice ( 26 ) peut être réglée sur la base de la flexibilité élastique de la partie de paroi ( 32 ) le long de l'axe longitudinal du corps,
**caractérisée en ce qu'**une surface ( 46 ) de contact dotée d'une inclinaison prescriptible se trouve dans l'état préalable au montage entre des parties ( 38 ) de l'organe ( 34 ) d'actionnement et des parties ( 40 ) du corps ( 12 ), et **en ce que** l'angle ( a ) d'inclinaison par rapport à l'axe longitudinal du corps est choisi de telle sorte que le jeu apparaissant entre les flancs de filets dans l'état monté est éliminé.

2. Bague filetée suivant la revendication 1, **caractérisée en ce que** la surface ( 46 ) de contact s'étend perpendiculairement à l'axe longitudinal du corps dans l'état monté, en éliminant le jeu des flancs de filets.

3. Bague filetée suivant la revendication 1 ou 2, **caractérisée en ce que** l'organe d'actionnement comprend plusieurs moyens de serrage, qui permettent de modifier la largeur de l'interstice ( 26 ) en des points sélectionnés.

4. Bague filetée suivant la revendication 3, **caractérisée en ce que** la surface ( 46 ) de contact inclinée est disposée dans l'état préalable au montage entre les moyens de serrage individuels et la seconde partie ( 12 ) de corps.

5. Bague filetée suivant la revendication 3 ou 4, **caractérisée en ce qu'**une partie de la surface ( 46 ) de contact est associée à chaque moyen de serrage.

6. Bague filetée suivant l'une des revendications 3 à 5, **caractérisée en ce que** le moyen de serrage respectif agit frontalement sur la seconde partie ( 12 ) de corps, de préférence est incorporé dans celle-ci dans au moins un logement ( perçage traversant 42 ).

7. Bague filetée suivant l'une des revendications 3 à 6, **caractérisée en ce qu'**il est prévu comme moyens de serrage des vis ( 34 ) de serrage qui sont régulièrement disposées sur un cercle partiel coaxial, qui traversent l'interstice ( 26 ) en parallélisme axial et qui, dans l'état monté, s'appuient par leurs têtes ( 38 ) de vis contre la surface ( 46 ) de contact sur la seconde partie ( 12 ) de corps.

8. Bague filetée suivant la revendication 7, **caractérisée en ce qu'**il est prévu comme vis ( 34 ) de serrage des vis hexagonales qui, dans la mesure où elles sont dans l'état monté noyées dans des logements associables ( perçages traversants 42 ) de la seconde partie ( 12 ) de corps, forment par leurs têtes ( 38 ) de vis, par rapport à la face ( 44 ) frontale extérieure de la seconde partie ( 12 ) de corps, un angle ( b ) d'immobilisation qui correspond à l'angle ( a ) d'inclinaison dans l'état préalable au montage.

9. Bague filetée suivant l'une des revendications 1 à 8, **caractérisée en ce que** la seconde partie ( 12 ) de corps servant de bague de sécurité possède, en formant la partie de paroi ( 32 ) élastiquement flexible, un diamètre extérieur qui est égal au diamètre extérieur de la première partie ( 10 ) de corps sous la forme de la bague de réglage.

10. Bague filetée suivant l'une des revendications 1 à 9, **caractérisée en ce que** l'angle ( a ) d'inclinaison est compris entre un demi-degré et cinq degrés, de préférence entre un et trois degrés.
